# EUROPEAN PATENT SPECIFICATION

(11) **EP 0 826 111 B1**
(45) Date of publication and mention of the grant of the patent: **20.02.2002**
(21) Application number: 96919904.1
(22) Date of filing: 28.05.1996
(51) Int. Cl.: F16D 3/06, F16D 3/221, F16D 3/227

(54) **ROTARY DRIVE COUPLING**
DREHKUPPLUNG
DISPOSITIF DE COUPLAGE D'UN MECANISME D'ENTRAINEMENT ROTATIF

(30) Priority: 26.05.1995 GB 9510700
(43) Date of publication of application: 04.03.1998
(73) Proprietor: The Turbo Genset Company Limited, Hounslow, Middlesex TW4 6JW (GB)
(72) Inventor: HALL, Justin, Arthur, Kingston upon Thames, Surrey KT2 7HZ (GB)
(74) Representative: Waldren, Robin Michael
(86) International application number: GB9601258
(87) International publication number: WO9637711

(56) References cited:
- EP-A- 0 037 174
- DE-C- 809 618
- FR-A- 905 161
- FR-A- 1 201 170
- FR-A- 2 701 742
- US-A- 2 375 030
- US-A- 3 245 227

## Description

The present invention relates to a coupling for a rotary drive. It may, for example, be used to couple a turbine engine and an electrical generator. However, it may be used in any application where rotary motion is to be transmitted from one component to another or between a component and a drive shaft, for example, in automotive applications.

US-3,245,227 describes a shaft coupling where one portion of the coupling can be tilted in its axial direction.

Normally, rotary drive couplings allow no axial displacement. Moreover, they allow little or no off-axis displacement, i.e. lateral movement of a component relative to the axis of rotation. Obviously, the conventional universal joint is an exception but this is not suitable for very high speed rotation, and does not allow axial movement unless combined with a separate sliding device such as a spline.

A new form of coupling has now been devised which is capable of high speed rotation yet permits axial displacement and a degree of non-alignment of the axes of the two shafts in terms of both angular and positional misalignment without causing undue stress on either shaft or the coupling. Thus, the present invention provides a rotary drive coupling comprising a first mounting for fixing to a first rotary component, a second mounting for fixing to a second rotary component and a linkage connecting the first and second mounting, bearing means being provided at least at the point of connection of the linkage and one of said first and second mounts for permitting axial displacement of at least one of said first and second rotary components.

In a preferred embodiment, some off-axial displacement is also permitted. However, the axial displacement is especially useful in applications such as the linkage between a high-speed turbine (e.g. > 5000 rpm), and an electrical generator. At such high speeds, a significant extension of the turbine shaft can occur and this is taken-up by the linkage of the invention.

Preferably, in the linkage according to the present invention, respective first and second bearing means are provided at the point of connection of the linkage and both said first and second mountings.

In the preferred embodiment of the present invention, at least one bearing means comprises a plurality of ball bearings. Advantageously, the plurality of ball bearings is located in a collar arrangement. Such a collar arrangement may be defined partly by a configuration of the linkage and partly by a configuration of the first and/or second mountings. The ball bearings may be held in place by at least one shim. However, preferably the collar arrangement is provided with at least one opening to allow axial movement of the ball bearings.

Furthermore, in the preferred embodiment, the linkage is tubular for a combination of strength but lightness of weight.

The present invention also extends to an arrangement of a rotary drive coupling according to the invention, as hereinbefore defined, in combination with one or more rotary machines, for example a turbine and an electrical generator.

The present invention will now be explained in more detail by way of the following description of a non-limiting embodiment and with reference to the accompanying drawings, in which:-
Figure 1 shows an axial cross-section through a rotary drive coupling according to the present invention; and
Figure 2 shows a cross-section alone the line AA depicted in Figure 1.

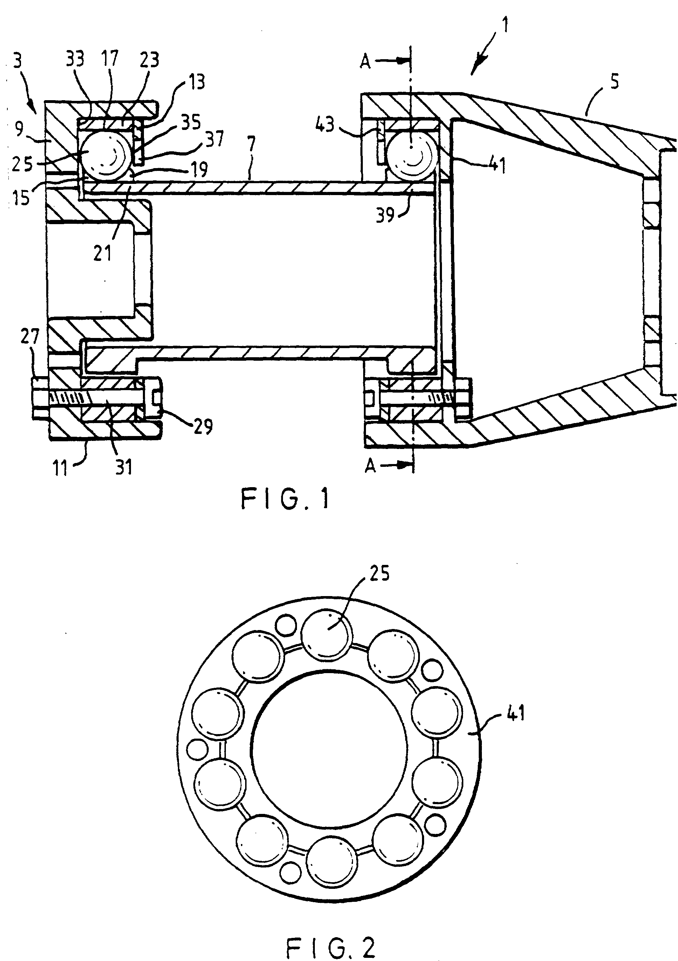

In Figure 1 there is shown a rotary drive coupling 1 according to the invention comprising a first mounting 3 and a second mounting 5. In this embodiment, the first mounting 3 is intended to receive the shaft of an electrical generator and the second mounting is intended to receive the shaft of a turbine.

The first mounting 3 and second mounting 5 are connected by a tubular linkage 7. The first mounting 3 comprises a annular end plate 9, an annular side flange 11 and annular inner cover plate 13 extending inwardly from the side flange 11 to define a plurality of cavities 15, etc., separated by dividing walls 17, etc. Each of these cavities 15, etc., is bounded on its inner side 19, opposite to the side flange 11, by a first end 21 of the tubular linkage 7. The first end 21 also has dividing walls 23, etc., extending inwardly of the cavities 15 etc., corresponding to the walls 17 etc.

In each of the cavities 15 etc., contains a ceramic ball bearing 25 etc. Thus, it will be seen from Figure 2, that a plurality of such ball bearings 25 etc., are effectively located in a collar arrangement bounded by a configuration of the first mounting 3, including the cover plate 13 and the first end 21 of the linkage 7. The cover plate is held in place on the first mounting 3 by a plurality of nut and bolt arrangements 27, 29 etc., extending through holes 31 etc., in said cover plate 13.

In order to hold the ball bearings 25 etc., in place respective shims 33, 35 etc., are provided on either side of each cavity 17 etc., i.e. adjacent the end plate 9 and cover plate 13. To allow the ball bearings 25, etc., to move axially respective holes 37 etc., are drilled in the cover plate 13. This permits the linkage to pivot in the first and second mounting allowing a degree of off-axis displacement (radial displacement). Axial displacement is permitted by the linkage sliding in the first and second mounting.

A corresponding collar arrangement is provided at the point of connection between the second end 39 of the linkage 7 and the second mounting 5. In this case, instead of the end plate 9 there is provided an inwardly depending annular flange 41 on the opposite side of the cavity arrangement to a second cover plate 43 which faces the first cover plate 13 at the other end of the linkage. The second mounting 5 is shown tapering radially inwardly as it extends axially outwardly of the linkage so as to be capable of receiving a shaft of the turbine.

In the light of this disclosure, modifications of the described embodiment, as well as other embodiments, all within the scope of the present invention as defined by the appended claims, will now be apparent to persons skilled in the art.

## Claims

1. A rotary drive coupling (1) comprising a first mounting (3) for fixing a first rotary component, a second mounting (5) for fixing to a second rotary component and a linkage (7) located between the first and second mountings for connecting the first and second mountings, bearing means (9, 11, 13, 21, 23, 25, 33, 35, 37) being provided at least at the point of connection of the linkage and one of said first and second mounts for permitting axial and radial displacement of at least one of said first and second rotary components.

2. A coupling according to claim 1, wherein respective first and second bearing means are provided at the point of connection of the linkage and both said first and second mountings.

3. A coupling according to either preceding claim, wherein the at least one bearing means comprises a plurality of ball bearings (25).

4. A coupling according to claim 3, wherein the plurality of ball bearings is located in a collar arrangement (9, 11, 13, 21).

5. A coupling according to claim 4, wherein the collar arrangement is defined partly by a configuration of the linkage and partly by a configuration of the first or second mounting.

6. A coupling according to either of claims 4 or 5, wherein each ball bearing is held in position by at least one shim (33, 35, 37).

7. A coupling according to any one of claims 4-6, wherein the collar arrangement is provided with respective openings (37) to allow axial movement of the ball bearings.

8. A coupling according to any preceding claim, wherein the linkage is tubular.

9. An assembly comprising a rotary electrical generator and a turbine, the generator and turbine being coupled by means of a rotary drive coupling (1) according to any preceding claim.

## Patentansprüche

1. Drehantriebskupplung (1), die aufweist: eine erste Halterung (3) für das Befestigen eines ersten Drehbauteils; eine zweite Halterung (5) für das Befestigen eines zweiten Drehbauteils daran; und eine Verbindung (7), die zwischen der ersten und zweiten Halterung für das Verbinden der ersten und zweiten Halterung angeordnet ist, wobei Lagereinrichtungen (9, 11, 13, 21, 23, 25, 33, 35, 37) mindestens an der Verbindungsstelle der Verbindung und einer von erster und zweiter Halterung vorhanden sind, um eine axiale und radiale Verschiebung von mindestens einem von erstem und zweitem Drehbauteil zu gestatten.

2. Kupplung nach Anspruch 1, bei der entsprechende erste und zweite Lagereinrichtungen an der Verbindungsstelle der Verbindung und sowohl der ersten als auch der zweiten Halterung vorhanden sind.

3. Kupplung nach beiden vorhergehenden Ansprüchen, bei der die mindestens eine Lagereinrichtung eine Vielzahl von Kugellagern (25) aufweist.

4. Kupplung nach Anspruch 3, bei der die Vielzahl der Kugellager in einer Ringanordnung (9, 11, 13, 21) angeordnet ist.

5. Kupplung nach Anspruch 4, bei der die Ringanordnung teilweise durch eine Konfiguration der Verbindung und teilweise durch eine Konfiguration der ersten oder zweiten Halterung definiert wird.

6. Kupplung nach entweder Anspruch 4 oder 5, bei der jedes Kugellager durch mindestens eine Zwischenscheibe (33, 35, 37) in Position gehalten wird.

7. Kupplung nach einem der Ansprüche 4 bis 6, bei der die Ringanordnung mit entsprechenden Öffnungen (37) versehen ist, um eine axiale Bewegung der Kugellager zu gestatten.

8. Kupplung nach vorhergehenden Ansprüchen, bei der die Verbindung rohrförmig ist.

9. Baugruppe, die einen Drehstromgenerator und eine Turbine aufweist, wobei der Generator und die Turbine mittels einer Drehantriebskupplung (1) nach vorhergehenden Ansprüchen gekuppelt werden.

## Revendications

1. Dispositif de couplage d'un mécanisme d'entraînement rotatif (1) comprenant un premier bâti destiné à être fixé à un premier composant rotatif, un deuxième bâti (5) destiné à être fixé à un deuxième composant rotatif et un élément de liaison (7) agencé entre les premier et deuxième bâtis pour raccorder les premier et deuxième bâtis, des moyens de support (9, 11, 13, 21, 23, 25, 33, 35, 37) étant agencés au moins au niveau du point de raccordement de l'élément de liaison et de l'un desdits premier et deuxième bâtis pour permettre un déplacement axial et radial d'au moins un desdits premiers et deuxième composants rotatifs.

2. Dispositif de couplage selon la revendication 1, dans lequel des premiers et deuxièmes moyens de support respectifs sont agencés au niveau du point de raccordement de l'élément de liaison et desdits premier et deuxième bâtis.

3. Dispositif de couplage selon l'une des revendications précédentes, dans lequel le au moins un moyen de support comprend plusieurs roulements à billes (25).

4. Dispositif de couplage selon la revendication 3, dans lequel les plusieurs roulements à billes sont agencés dans un agencement en collier (9, 11, 13, 21),

5. Dispositif de couplage selon la revendication 4, dans lequel l'agencement en collier est défini en partie par la configuration de l'élément de liaison et en partie par la configuration des premier ou deuxième bâtis.

6. Dispositif de couplage selon l'une des revendications 4 ou 5, dans lequel chaque roulement à billes est maintenu dans sa position par au moins une cale (33, 35, 37),

7. Dispositif de couplage selon l'une quelconque des revendications 4 à 6, dans lequel l'agencement en collier comporte des ouvertures respectives (37) pour permettre le déplacement axial des roulements à billes.

8. Dispositif de couplage selon l'une quelconque des revendications précédentes, dans lequel l'élément de liaison est tubulaire.

9. Assemblage comprenant une génératrice rotative et une turbine, la génératrice et la turbine étant couplées par l'intermédiaire d'un dispositif de couplage (1) d'un mécanisme d'entraînement rotatif selon l'une quelconque des revendications précédentes.
